# EUROPÄISCHE PATENTSCHRIFT

(11) **EP 0 944 909 B1**
(45) Veröffentlichungstag und Bekanntmachung des Hinweises auf die Patenterteilung: **30.10.2002**
(21) Anmeldenummer: 97941827.4
(22) Anmeldetag: 26.08.1997
(51) Int. Cl.: H01C 17/02, H01C 1/032, H01G 4/30

(54) **ELEKTRO-KERAMISCHES BAUELEMENT UND VERFAHREN ZU SEINER HERSTELLUNG**
ELECTROCERAMIC COMPONENT AND METHOD FOR ITS MANUFACTURE
COMPOSANT ELECTROCERAMIQUE ET SON PROCEDE DE FABRICATION

(30) Priorität: 26.08.1996 DE 19634498
(43) Veröffentlichungstag der Anmeldung: 29.09.1999
(73) Patentinhaber: EPCOS AG, 81541 München (DE)
(72) Erfinder: GROBBAUER, Peter, A-8052 Graz (AT); OTT, Günter, A-8541 Schwanberg (AT); ZÖDL, Heinrich, A-8530 Deutschlandsberg (AT)
(74) Vertreter: Epping, Wilhelm, Dipl.-Ing.
(86) Internationale Anmeldenummer: DE9701853
(87) Internationale Veröffentlichungsnummer: WO98009299

(56) Entgegenhaltungen:
- WO-A-90/16074
- US-A- 3 905 006
- US-A- 5 072 329
- US-A- 5 195 019
- PATENT ABSTRACTS OF JAPAN vol. 096, no. 007, 31.Juli 1996 & JP 08 064462 A (MURATA MFG CO LTD), 8.März 1996,

## Beschreibung

Die vorliegende Erfindung betrifft ein elektro-keramisches Bauelement nach dem Oberbegriff des Patentanspruchs 1 sowie ein Verfahren zu seiner Herstellung nach Patentanspruch 5.

Ein derartiges elektro-keramisches Bauelement ist aus WO-A-90 16074 bekannt.

Elektrische funktionskeramische Bauelemente bestehen generell aus einem die Bauelementefunktion definierenden Bauelementekörper aus Funktionskeramik, an diesem vorgesehenen Anschlußmetallisierungen sowie einer Schutzumhüllung auf von den Anschlußmetallisierungen freien Fächenbereichen des Bauelementekörpers. Unter dem Begriff "Funktionskeramik" werden hier aktive Elektrokeramiken, beispielsweise für elektrische Leiter, verstanden. Bei für eine SMD-Montage geeigneten Bauelementen der in Rede stehenden Art ist ein generell quaderförmiger Bauelementekörper vorgesehen, bei dem an zwei sich gegenüberliegenden Stirnseiten kappenförmige Anschlußmetallisierungen vorgesehen sind. Die von diesen kappenförmigen Anschlußmetallisierungen freien Oberflächenbereiche des Bauelementekörpers sind mit der Schutzumhüllung versehen.

Die Schutzumhüllung dient bei diesen Bauelementen zur Minimierung von Oberflächeneinflüssen, um einen definierten Stromfluß durch das Bauelement zu gewährleisten. Die Schutzumhüllung gewährleistet eine bessere Stromaufteilung zwischen den kappenförmigen Anschlußmetallisierungen, verbessert die Stabilität und schützt vor Oberflächenreaktionen.

Der vorliegenden Erfindung liegt die Aufgabe zugrunde, eine Schutzumhüllung der in Rede stehenden Art anzugeben, mit der mittels Standard-Galvanik-Bedingungen mehrschichtige Anschlußmetallisierungen realisierbar und die damit versehenen Bauelemente im Bereich von Niederspannungen bis zu Netzspannungen anwendbar sind.

Diese Aufgabe wird durch ein elektro-keramisches Bauelement gelöst, das die im Patentanspruch 1 angegebenen Merkmale besitzt.

Ein Verfahren zur Herstellung eines erfindungsgemäßen Bauelementes ist Gegenstand des Patentanspruchs 5.

Weiterbildungen der Erfindung sowohl hinsichtlich des erfindungsgemäßen Bauelementes als auch des erfindungsgemäßen Verfahrens sind Gegenstand entsprechender Unteransprüche.

Die Erfindung wird nachfolgend anhand von Ausführungsbeispielen gemäß den Figuren der Zeichnung näher erläutert. Es zeigt:
Figur 1 eine schematische perspektivische Ansicht eines für eine SMD-Montage geeigneten elektro-keramischen Bauelementes;
Figur 2 eine schematische perspektivische Ansicht eines Keramikkörpers als Ausgangselement für die Herstellung erfindungsgemäßer Bauelemente;
Figur 3 einen Schnitt in einer Ebene III-III mit einer erfindungsgemäßen Schutzumhüllung;
Figur 4 einen der Figur 3 entsprechenden Schnitt in einer Ebene IV-IV in Figur 2; und
Figur 5 eine der Figur 4 entsprechende Darstellung eines erfindungsgemäßen Bauelementes vom Innenelektrodentyp.

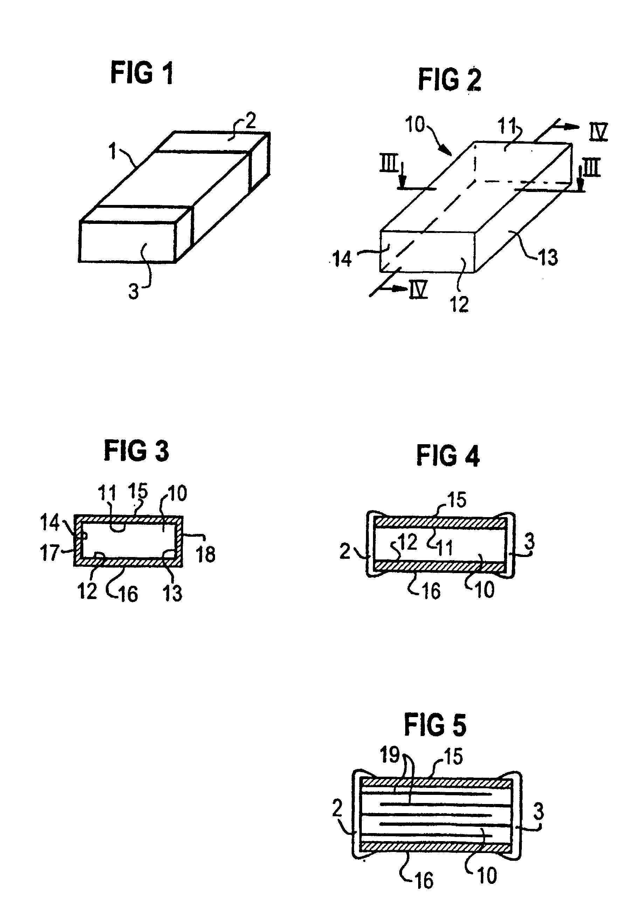

Gemäß Figur 1 wird ein für eine SMD-Montage geeignetes elektro-keramisches Bauelement durch einen funktionskeramischen Bauelementekörper 1 in Quaderform sowie an sich gegenüberliegenden Stirnseiten dieses Bauelementekörpers 1 vorgesehene kappenförmige Anschlußmetallisierungen 2, 3 gebildet.

Gemäß Figur 2 findet ein quaderförmiger Keramikkörper 10 als Ausgangselement für erfindungsgemäße elektro-keramische Bauelemente Verwendung. Auf jeweils sich gegenüberliegenden Flächen 11, 12 bzw. 13, 14 dieses Keramikkörpers 10 wird eine Schutzumhüllung aus zwei unterschiedlichen Materialien ausgebildet. Eine erfindungsgemäße Schutzumhüllung ist also zweiteilig und wird insbesondere durch ein Laminat 15, 16 auf den sich gegenüberliegenden Flächen 11, 12 des Keramikkörpers 10 bzw. durch hochohmige oberflächennahe Schichten 17, 18 an den sich gegenüberliegenden Flächen 13, 14 des Keramikkörpers 10 gebildet, wie dies aus Figur 3 ersichtlich ist. Das Laminat 15, 16 kann in Weiterbildung der Erfindung ein Isolationsmaterial oder eine hochohmige Keramik sein, welche oberflächennah erzeugt der Keramik des Keramikkörpers 10 entspricht. Als Isolationsmaterialien für das Laminat 15, 16 kommen beispielsweise BaTiO₃, SiO₂, Al₂O₃ oder Glas in Frage.

Die hochohmigen oberflächennahen Schichten 17, 18 sind erfindungsgemäß dotierte Schichten des Keramikkörpers 10 selbst.

Bei einem Verfahren zur Herstellung von erfindungsgemäßen elektro-keramischen Bauelementen werden generell der Bauelementekörper 10 und das Laminat 15, 16 durch Folienziehen und die hochohmigen oberflächennahen Schichten durch Dotierung mit einem Dotierungsstoff, vorzugsweise dem Dotierungsstoff, der auch zur Realisierung der für die Bauelementefunktion notwendigen elektrischen Leitfähigkeit dient, hergestellt.

Die Dotierung zur Bildung der hochohmigen oberflächennahen Schichten 17, 18 kann durch Imprägnieren des Keramikkörpers 10 mit einem dem Dotierungsstoff enthaltenden Mittel oder durch Aufbringen mittels Siebdruck, Walzen oder Sprühen auf den Keramikkörper 10 erfolgen.

Im Falle des Imprägnierens kann das Imprägniermittel eine den Dotierungsstoff enthaltende Suspension oder Lösunq sein.

Im einzelnen kann man erfindungsgemäße Bauelemente wie folgt erzeugen.

Zunächst erfolgt ein Folienziehen von Funktionskeramik - Keramikkörper 10 und Laminat 15, 16, Stapeln der Folien und Verpressen des Folienstapels unter Bildung eines Grünkörpers. Dies kann beispielsweise so erfolgen, daß ein größerer Grünkörper im Format von etwa 10 x 10 cm hergestellt oder bereits auf die Größe von Einzelbauelementen unterteilte Folien gestapelt und verpreßt werden. Wird ein größerer Grünkörper hergestellt, so kann nach dem Folienziehen, Stapeln und Verpressen ein Unterteilen auf für die Einzelbauelemente vorgesehene Größe erfolgen.

Danach werden auf den weiteren sich gegenüberliegenden Flächen - 13, 14 in den Figuren 2 und 3 - die hochohmigen oberflächennahen Schichten 17, 18 hergestellt. Generell erfolgt der Dotierungsvorgang dabei so, daß bei einem nachfolgenden Sintern hochohmige oder auch isolierende Schichten mit der notwendigen Eindringtiefe entstehen.

Schließlich erfolgt die Herstellung der Anschlußmetallisierungen 2, 3 in an sich bekannter Weise beispielsweise durch Tauchen der Bauelementekörper in Ag-, AgPd- oder AgPdPt-Pasten und nachfolgende galvanische Verstärkung beispielsweise mittels Ni und Sn.

Die vorstehenden Ausführungen beziehen sich in Verbindung mit den Figuren 1 bis 4 auf elektro-keramische Bauelemente mit einem monolithischen Bauelementekörper. Entsprechend können jedoch auch Mehrschichtbauelemente vom Innenelektrodentyp hergestellt werden, wie dies schematisch in Figur 5 dargestellt ist, in der gleiche Elemente wie in den Figuren 1 bis 4 mit gleichen Bezugszeichen versehen sind. Dabei sind in an sich bekannter Weise in einen Keramikkörper 10 Innenelektroden 19 eingebettet, wobei das Bauelement in Vielschichttechnologie herstellbar ist.

## Patentansprüche

1. Elektro-keramisches Bauelement mit einem keramischen Bauelementekörper (1; 10), der eine für eine SMD-Montage geeignete Form besitzt, mit Anschlußmetallisierungen (2, 3) an sich gegenüberliegenden Seiten des Bauelementekörpers (1; 10) und mit einer Schutzumhüllung (15 bis 18), auf den von den Anschlußmetallisierungen (2, 3) freien Flächen (10 bis 14) des Bauelementekörpers (1; 10), wobei
die Schutzumhüllung (15 bis 18) durch ein auf zwei gegenüberliegenden Flächen (11, 12) des Bauelementekörpers (1; 10) angeordnetes Isolationsmaterial (15, 16) sowie durch hochohmige oberflächennahe Schichten (17, 18) an zwei weiteren sich gegenüberliegenden Flächen (13, 14) des Bauelementekörpers (1; 10) gebildet ist,
**dadurch gekennzeichnet,**
**daß** die hochohmigen oberflächennahen Schichten (17, 18) dotierte Schichten sind.

2. Bauelement nach Anspruch 1,
**dadurch gekennzeichnet,**
**daß** das Isolationsmaterial (15, 16) aus BaTiO₃, SiO₂ oder Al₂O₃ besteht.

3. Bauelement nach Anspruch 1,
**dadurch gekennzeichnet,**
**daß** das Isolationsmaterial (15, 16) aus Glas besteht.

4. Bauelement nach Anspruch 1,
**dadurch gekennzeichnet,**
**daß** das Isolationsmaterial (15, 16) aus einer hochohmigen Keramik besteht, welche gleich der Keramik des Bauelementekörpers (1; 10) ist.

5. Verfahren zur Herstellung eines Bauelementes nach einem der Ansprüche 1 bis 4,
**dadurch gekennzeichnet,**
**daß** der Bauelementekörper (1; 10) und das Isolationsmaterial (15, 16) durch Folienziehen und die hochohmigen oberflächennahen Schichten (17, 18) mit dem Dotierungsstoff, der auch zur Realisierung der für die Bauelementefunktion notwendigen elektrischen Leitfähigkeit dient, hergestellt werden.

6. Verfahren nach Anspruch 5,
**dadurch gekennzeichnet,**
**daß** die Dotierung zur Bildung der hochohmigen oberflächennahen Schichten (17, 18) durch Imprägnieren des Bauelementekörpers (1; 10) mit einem den Dotierungsstoff enthaltenden Mittel erfolgt.

7. Verfahren nach Anspruch 6,
**dadurch gekennzeichnet,**
**daß** ein Imprägniermittel mit einer den Dotierungsstoff enthaltenden Suspension verwendet wird.

8. Verfahren nach Anspruch 6,
**dadurch gekennzeichnet,**
**daß** als Imprägniermittel eine den Dotierungsstoff enthaltende Lösung verwendet wird.

9. Verfahren nach Anspruch 5,
**dadurch gekennzeichnet,**
**daß** der Dotierungsstoff zur Bildung der hochohmigen oberflächennahen Schichten (17, 18) durch Siebdruck, Walzen oder Sprühen auf den Bauelementekörper (1; 10) aufgebracht wird.

10. Verfahren nach einem der Ansprüche 5 bis 9,
**dadurch gekennzeichnet,**
**daß** ein Folienstapel aus Bauelementekörperkeramik (10) und Isolationsmaterial (15, 16) zu einem Grünkörper verpreßt, an den vom Isolationsmaterial (15, 16) freien sich gegenüberliegenden Seiten hochohmige oberflächennahe Schichten (17, 18) hergestellt werden und eine Sinterung durchgeführt wird.

11. Verfahren nach Anspruch 10,
**dadurch gekennzeichnet,**
**daß** der Grünkörper vor dem Herstellen der hochohmigen oberflächennahen Schichten (17, 18) in Einzelbauelementekörper (1) getrennt wird.

## Claims

1. Electroceramic component having a ceramic component body (1; 10), which has a form suitable for SMD mounting, having connection metallization coatings (2, 3) on mutually opposite sides of the component body (1; 10), and having a protective encapsulation (15 to 18), on the areas (10 to 14) of the component body (1; 10) which are free from the connection metallization coatings (2, 3), in which case
the protective encapsulation (15 to 18) is formed by an insulation material (15, 16) arranged on two mutually opposite areas (11, 12) of the component body (1; 10), as well as by high-resistance layers (17, 18), near the surface, on two further mutually opposite areas (13, 14) of the component body (1; 10),
**characterized**
**in that** the high-resistance layers (17, 18) near the surface are doped layers.

2. Component according to Claim 1,
**characterized**
**in that** the insulation material (15, 16) is composed of BaTiO₃, SiO₂ or Al₂O₃.

3. Component according to Claim 1,
**characterized**
**in that** the insulation material (15, 16) is composed of glass.

4. Component according to Claim 1,
**characterized**
**in that** the insulation material (15, 16) is composed of a high-resistance ceramic which is identical to the ceramic of the component body (1; 10).

5. Method for producing a component according to one of Claims 1 to 4,
**characterized**
**in that** the component body (1; 10) and the insulation material (15, 16) are produced by sheet drawing and the high-resistance layers (17, 18) near the surface are produced with the dopant which also serves for realizing the electrical conductivity necessary for the function of the component.

6. Method according to Claim 5,
**characterized**
**in that** the doping for the purpose of forming the high-resistance layers (17, 18) near the surface is effected by impregnating the component body (1; 10) with an agent containing the dopant.

7. The method according to Claim 6,
**characterized**
**in that** an impregnation agent with a suspension containing the dopant is used.

8. Method according to Claim 6,
**characterized**
**in that** a solution containing the dopant is used as the impregnation agent.

9. Method according to Claim 5,
**characterized**
**in that** the dopant for the purpose of forming the high-resistance layers (17, 18) near the surface is applied to the component body (1; 10) by screen printing, rolling or spraying.

10. Method according to one of Claims 5 to 9,
**characterized**
**in that** a sheet stack comprising component body ceramic (10) and insulation material(15, 16) is pressed to form a green body, high-resistance layers (17, 18) near the surface are produced on mutually opposite sides which are free from the insulation material (15, 16), and sintering is carried out.

11. Method according to Claim 10,
**characterized**
**in that** the green body is separated into individual component bodies (1) before the high-resistance layers (17, 18) near the surface are produced.

## Revendications

1. Composant électrocéramique ayant une pièce (1; 10) de composant en céramique qui a une forme appropriée à un montage SMD, ayant des métallisations (2, 3) servant de bornes sur des faces opposées de la pièce (1 ; 10) pour composant et une enveloppe (15 à 18) de protection sur les surfaces (10 à 14) exemptes de métallisations (2, 3) servant de bornes de la pièce (1 ; 10) pour composant, l'enveloppe (15 à 18) de protection étant formée d'un matériau (15, 16) isolant disposé sur deux surfaces (11, 12) opposées de la pièce (1 ; 10) pour composant, ainsi que par des couches (17, 18) de grande valeur ohmique et proches de la surface, sur deux autres surfaces (13, 14) opposées de la pièce (1 ; 10) pour composant,
**caractérisé en ce que** les couches (17, 18) à grande valeur ohmique et proches de la surface sont des couches dopées.

2. Composant suivant la revendication 1, **caractérisé en ce que** la matière (15, 16) isolante est en BaTiO₃, SiO₂ ou Al₂O₃.

3. Composant suivant la revendication 1, **caractérisé en ce que** la matière (15, 16) isolante est en verre.

4. Composant suivant la revendication 1, **caractérisé en ce que** la matière (15, 16) isolante est en une céramique à grande valeur ohmique qui est la même que la céramique de la pièce (1 ; 10) pour composant.

5. Procédé de fabrication d'un composant suivant l'une des revendications 1 à 4, caractérisé en ce l'on fabrique la pièce (1; 10) pour composant et la matière (15, 16) isolante par tirage de feuilles et les couches (17, 18) de grande valeur ohmique et proches de la surface avec la substance de dopage qui sert également à la réalisation de la conductivité électrique nécessaire à la fonction des composants.

6. Procédé suivant la revendication 5, **caractérisé en ce que** l'on effectue le dopage pour la formation des couches (17, 18) de grande valeur ohmique et proches de la surface par imprégnation de la pièce (1 ; 10) pour composant par un agent contenant de la substance de dopage.

7. Procédé suivant la revendication 6, **caractérisé en ce que** l'on utilise comme agent d'imprégnation une suspension contenant la substance de dopage.

8. Procédé suivant la revendication 6, **caractérisé en ce que** l'on utilise comme agent d'imprégnation une solution contenant la substance de dopage.

9. Procédé suivant la revendication 5, **caractérisé en ce que** l'on dépose la substance de dopage pour la formation des couches (17, 18) de grande valeur ohmique et proches de la surface par sérigraphie, laminage ou projection sur la pièce (1 ; 10) pour composant.

10. Procédé suivant l'une des revendications 5 à 9, **caractérisé en ce que** l'on comprime un empilage de feuilles en céramique (10) pour pièce de composant et une matière (15, 16) isolante en une pièce crue sur laquelle on ménage, sur les faces opposées exemptes de matière (15, 16) isolante, des couches (17, 18) de grande valeur ohmique et proches de la surface et l'on effectue un frittage.

11. Procédé suivant la revendication 10, **caractérisé en ce que** l'on sépare le corps cru avant la fabrication des couches (17, 18) de grande valeur ohmique et proches de la surface en des pièces (1) individuelles pour composant.
